# EUROPEAN PATENT APPLICATION

(11) **EP 4 752 815 A1**
(43) Date of publication of application: **03.06.2026**
(21) Application number: 24844235.2
(22) Date of filing: 05.03.2024
(51) Int. Cl.: G06Q 40/04

(54) **DATA RIGHTS AND INTERESTS MANAGEMENT METHOD, COMMUNICATION DEVICE AND STORAGE MEDIUM**

(30) Priority: 27.07.2023 CN 202310940231
(71) Applicant: ZTE Corporation, Shenzhen, Guangdong 518057 (CN)
(72) Inventor: XUE, Yan, Shenzhen, Guangdong 518057 (CN); XIE, Feng, Shenzhen, Guangdong 518057 (CN); YANG, Li, Shenzhen, Guangdong 518057 (CN); DAI, Bo, Shenzhen, Guangdong 518057 (CN)
(74) Representative: Ziebig Hengelhaupt Intellectual Property Attorneys Patentanwaltskanzlei PartGmbB
(86) International application number: PCT/CN2024/080185
(87) International publication number: WO 2025/020538

(57) **Abstract**

Disclosed are a data rights and interests management method, a communication device and a storage medium. The data rights and interests management method comprises: determining data rights and interests of a second network element, the data rights and interests of the second network element being used for representing rights and interests of the second network element related to data generated by the second network element; and sending first data rights and interests information to the second network element, the first data rights and interests information comprising data rights and interests related information of the second network element.

## Description

The present disclosure claims a priority to Chinese Patent Application No. 202310940231.X, and filed on July 27, 2023, the entire content of which is incorporated into the present application by reference.

### TECHNICAL FIELD

The present disclosure relates to the field of communication technologies, and in particular, to a data rights and interests management method, a communication apparatus, and a storage medium.

### BACKGROUND

Under a current network architecture, principal rights and interests oriented to data have long been in an ambiguous zone. For example, since network device vendors and terminal users are not entitled to a right to participate in or a right to provide guidance for network planning and operation and maintenance optimization, operators have no alternative but to adopt technologies such as self-organized networks (SON), minimization of drive tests (MDT) and network data analytics function (NWDAF), etc., to conduct long-cycle measurements and big data collection on specific terminal users or network elements.

### SUMMARY

In an aspect, a data rights and interests management method is provided, and applied to a first network element. The data rights and interests management method includes:
determining data rights and interests of a second network element, where the data rights and interests of the second network element are used to characterize rights and interests of the second network element related to data generated by the second network element; and
sending first data rights and interests information to the second network element, where the first data rights and interests information includes related information of data rights and interests of the second network element.

In another aspect, a data rights and interests management method is provided, and applied to a second network element. The data rights and interests management method includes:
receiving first data rights and interests information sent from a first network element, where the first data rights and interests information includes related information of data rights and interests of the second network element, data rights and interests are used to characterize rights and interests of the second network element related to data generated by the second network element; and
acquiring data rights and interests of the second network element according to the first data rights and interests information.

In yet another aspect, a data rights and interests management method is provided, and applied to a third network element. The data rights and interests management method includes:
receiving first data rights and interests information sent from a first network element, where the first data rights and interests information includes related information of data rights and interests of a second network element, data rights and interests of the second network element are used to characterize rights and interests of the second network element related to data generated by the second network element.

In yet another aspect, a data rights and interests management apparatus is provided, and applied to a first node. The data rights and interests management apparatus includes:
a determining module, configured to determine data rights and interests of a second network element, where the data rights and interests of the second network element are used to characterize rights and interests of the second network element related to data generated by the second network element;
a sending module, configured to send first data rights and interests information to the second network element, where the first data rights and interests information includes related information of data rights and interests of the second network element.

In yet another aspect, a data rights and interests management apparatus is provided, and applied to a second node. The data rights and interests management apparatus includes:
a receiving module, configured to receive first data rights and interests information sent from a first network element, where the first data rights and interests information includes related information of data rights and interests of the second network element, data rights and interests are used to characterize rights and interests of the second network element related to data generated by the second network element;
an acquiring module 502, configured to acquire data rights and interests of the second network element according to the first data rights and interests information.

In yet another aspect, a data rights and interests management apparatus is provided, and applied to a third node. The data rights and interests management apparatus includes:
a receiving module, configured to receive first data rights and interests information sent from a first network element, where the first data rights and interests information includes related information of data rights and interests of a second network element, the data rights and interests of the second network element are used to characterize rights and interests of the second network element related to data generated by the second network element.

In yet another aspect, a communication apparatus is provided, and includes: a memory and a processor; the memory is coupled with the processor; the memory is configured to store a computer program; and the processor, when executing the computer program, implements the data rights and interests management method described in any one of the above aspects.

In yet another aspect, a computer readable storage medium is provided and the computer readable storage medium has stored computer program instructions thereon, and the computer program instructions, when executed by a processor, implement the data rights and interests management method described in any one of the above aspects.

In yet another aspect, a computer program product is provided, the computer program product includes computer program instructions, and the computer program instructions, when executed by a processor, implement the data rights and interests management method described in any one of the above aspects.

### BRIEF DESCRIPTION OF THE DRAWINGS

In order to illustrate technical solutions in the present disclosure more clearly, the drawings to be used in some embodiments of the present disclosure will be introduced briefly. Obviously, the drawings to be described below are merely drawings of some embodiments of the present disclosure, and those ordinary skilled in the art may also obtain other drawings according to these drawings.
FIG. 1 is a schematic diagram of a network architecture according to some embodiments.
FIG. 2 is a schematic diagram of another network architecture according to some embodiments.
FIG. 3 is a flow chart of a data rights and interests management method according to some embodiments.
FIG. 4 is a flow chart of another data rights and interests management method according to some embodiments.
FIG. 5 is a flow chart of yet another data rights and interests management method according to some embodiments.
FIG. 6 is a flow chart of yet another data rights and interests management method according to some embodiments.
FIG. 7 is a structural schematic diagram of a data rights and interests management apparatus according to some embodiments.
FIG. 8 is a structural schematic diagram of another data rights and interests management apparatus according to some embodiments.
FIG. 9 is a structural schematic diagram of yet another data rights and interests management apparatus according to some embodiments.
FIG. 10 is a structural schematic diagram of a communication apparatus according to some embodiments.

### DETAILED DESCRIPTION

In order to enable those skilled in the art to better understand technical solutions of the embodiments of the present disclosure, the technical solutions in the present disclosure will be described below clearly and completely with reference to the drawings. Obviously, the described embodiments are merely some but not all of the embodiments of the present disclosure. Based on the embodiments in the present disclosure, all other embodiments obtained by those ordinary skilled without creative efforts shall fall within the protection scope of the present disclosure.

It should be noted that in the present disclosure, the words such as "exemplary/exemplarily" or "for example (e.g.)", etc., are used to present an example, illustration, or explanation. Any embodiment or design solution described with "exemplary/exemplarily" or "for example (e.g.)" in the present disclosure is not necessarily to be construed as preferred or advantageous over other embodiments or design solutions. Rather, the use of the words such as "exemplary/exemplarily" or "for example (e.g.)", etc., is intended to present relevant concepts in a specific manner.

Hereinafter, the terms "first", "second", etc., are used for descriptive purposes only, but are not to be construed as indicating or implying relative importance or implicitly indicating a number of indicated technical features. Thus, features defined with "first" or "second", etc., may explicitly or implicitly include one or more such features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

In the prior art, there exists the problem of unclear data rights and interests, which results in low enthusiasm among all network participants, difficulties in opening up data assets, and inefficient data transactions.

To address the above technical problems, the embodiments of the present disclosure provide a data rights and interests management method, the concept of which is as follows: managing a data rights and interests generated in the network by defining specified first data rights and interests information, clarifying a data rights and interests of a network element for various types of data, and thus enhancing value of various types of data in the network.

It can be understood that, for data rights and interests, it is necessary to determine the subject of rights of data and the content of the rights, i.e., which entities are entitled to what specific rights with respect to the data. Throughout the entire lifecycle of data, from generation to elimination, four main roles are involved: a data owner, a data producer, a data user, and a data manager. For different types of data assets, the owners, producers, users, and managers may differ. In other words, rights and interests management of data involves different behaviors of different roles.

Rights and interests consist of two components: rights and interests, and generally refer to aspects, such as the roles, statuses, rights, and interests allocated to specific entities. Operations such as the allocation, changing, and trading of rights and interests may lead to greater value creation opportunities. In wireless systems, some network rights include: a right to participate in network planning and construction, a right to assist in network maintenance and optimization, a right to control and dominate services, and a right to ownership of digital assets, etc. The interaction process between network entities is performed by network elements, and the network elements may be devices, functions, entities, nodes, protocol layers, or components, etc. When network data involves business activities or transactions, the data rights and interests of network elements also correspond to data rights and interests of business entities in a business dimension. Common business entities include operators, equipment manufacturers, terminal manufacturers, individual consumers, government and enterprise customers, application providers, content providers, holders of specific network element nodes (such as properties), and super terminal users. For example, operators are business entities, and the core network device owned by operators is a network entity.

To protect data rights and interests of various network entities, in the embodiments of the present disclosure, roles of various network entities are first determined, and then rights and interests management such as confirmation of rights and profit sharing for various network entities, etc., are performed. Confirmation of rights refers to clarifying an ownership right, a right to know, a right to participate, a right to control, a right to manage, a right to make suggestions, and a right to process data of various entities. Rights and interests management also includes business practices and business models such as defining incentives (e.g., rewards obtained by data producers for generating data), transaction rules, charging modes, transaction modes, and profit-sharing strategies, etc.

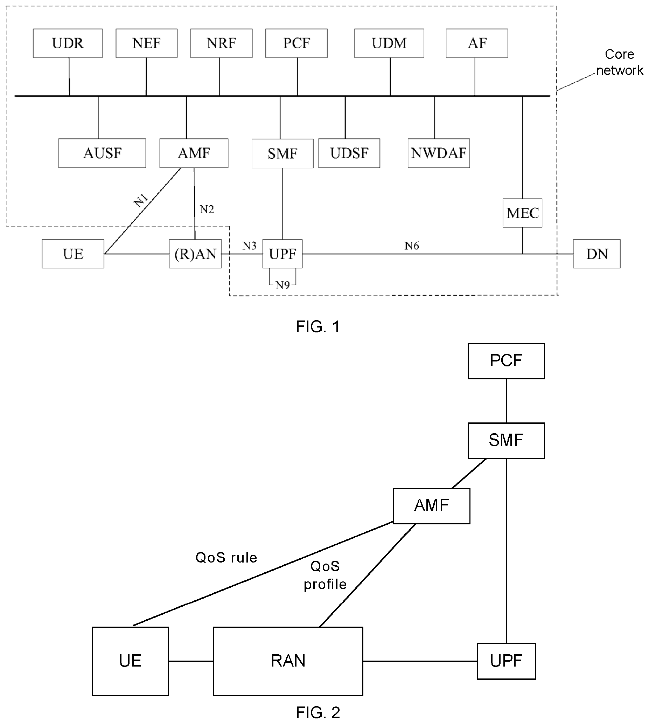

Referring to FIG. 1, FIG. 1 is a schematic diagram of an architecture of a network involved in the embodiments of the present disclosure. As shown in FIG. 1, the network architecture includes: a core network (CN), a radio access network (RAN), a user equipment (UE) and a data network (DN).

The core network has multiple network functions (NFs), and respective NFs may access each other through service interfaces. Exemplarily, main NFs of the core network include:
a user plane function (UPF), serving as a user plane access NF of the network, is mainly responsible for functions, such as packet routing and forwarding of user plane data, policy enforcement, traffic reporting, and quality of service (QoS) processing, etc.

UPF and UPF may be connected via the user plane interface, such as a N9 interface, to transmit uplink and downlink user data flows between UPFs.

The Network Provider Repository (NRF) function is mainly responsible for registering and managing various NFs in the network.

Unified data management (UDM) is responsible for the unified management of user data such as user subscription information and security information, as well as related functions such as user identification, access authorization, and mobility management, etc.

An authentication server function (AUSF), as an authentication center of the network, is primarily responsible for providing authentication and access authorization to users and may also perform authentication and authorization for external applications and B2B.

An application function (AF) is used for control plane interaction of applications and delivery of application QoS requirements or parameters.

The network exposure function (NEF) enables third-party applications (AF) to interact with various network elements in the core network through the NEF.

A session management function (SMF) is mainly responsible for tunnel maintenance, internet protocol (IP) address allocation and management, user plane (UP) management, policy enforcement, QoS control, charging data collection, roaming and other functions.

The SMF may also derive a QoS profile (a QoS profile document) according to a policy control and charging (PCC) rule and generate a QoS flow. The SMF may further send the QoS profile to an RAN, send a packet detection rule (PDR) to a UPF, and bind the PCC rule to the QoS flow. The SMF may select a UPF based on a granularity of the UE or session, assign an IP address, collect charging data, and connect to a charging center, etc.

A policy control function (PCF) is a network element in a policy and charging control architecture that provides policy rules for control plane functions, formulating PCC rules, and authorizing the SMF on a per-service data flow (SDF) basis.

An access and mobility management function (AMF), as a control-plane access NF for users, is mainly responsible for registration management, connection management, reachability management, security management, mobility management, etc., of users.

Exemplarily, the AMF may provide a session management message transmission channel for the UE and SMF, and provide an authentication function and an authorization function for users during user access and serve as a control plane access point of the radio access network and a core network. Exemplarily, as shown in FIG. 2, the AMF may forward the QoS profile from the SMF to the RAN and forward the QoS rule from the SMF to the UE.

The unified data repository (UDR) is responsible for storing structured user data. For example, user subscription data, strategy data, capability development data, and application data, etc.

The unstructured data storage function (UDSF) is responsible for storing unstructured data. For example, UE context data.

The NWDAF is responsible for data collection, delivery, storage, and data analysis.

An edge node (e.g., mobile edge computing (MEC)) is a node deployed at an edge of the core network and undertakes a large number of computing tasks.

In some embodiments, in terms of operation and maintenance, the core network introduces a management data analytics function (MDAF) (not shown in FIG. 1) to manage network configuration data. Through the collaboration of the MDAF, various NFs of the CN and the RAN, the core network achieves the provision of basic data service capabilities.

UE is an important concept in mobile communications, UE may be a mobile phone, a smart terminal, a multimedia device, a streaming media device, etc.

The UE and AMF are connected through a signaling plane interface N1.

The RAN is a type of access network (AN). The RAN refers to introducing a part or all of the access network (AN) over a radio transmission medium to provide fixed terminal services and/or mobile terminal services for users.

The RAN and AMF are connected through a signaling plane interface N2. The RAN and UPF are connected through N3 for transmitting uplink user plane data and downlink user plane data.

Exemplarily, the RAN is terrestrial infrastructure. For example, the RAN may be a base station (BS).

The data network (DN) corresponds to operator services, Internet access, third-party services and the like. Exemplarily, third-party applications (Apps) may be deployed on the DN.

The DN and UPF may be connected through the N6 interface to transmit uplink user data streams and downlink user data streams between the UPF and DN.

It should be noted that, the network architecture and application scenarios described in the embodiments of the present disclosure are provided only for more clearly explaining the technical solutions of the present disclosure, and do not constitute a limitation on the technical solutions provided in the embodiments of the present disclosure. Those ordinary skilled in the art can know that, with the evolution of the network architecture and the emergence of new business scenarios, the technical solutions provided by the embodiments of the present disclosure are also applicable to similar technical problems.

The data rights and interests management method provided in the embodiments of the present disclosure is introduced below.

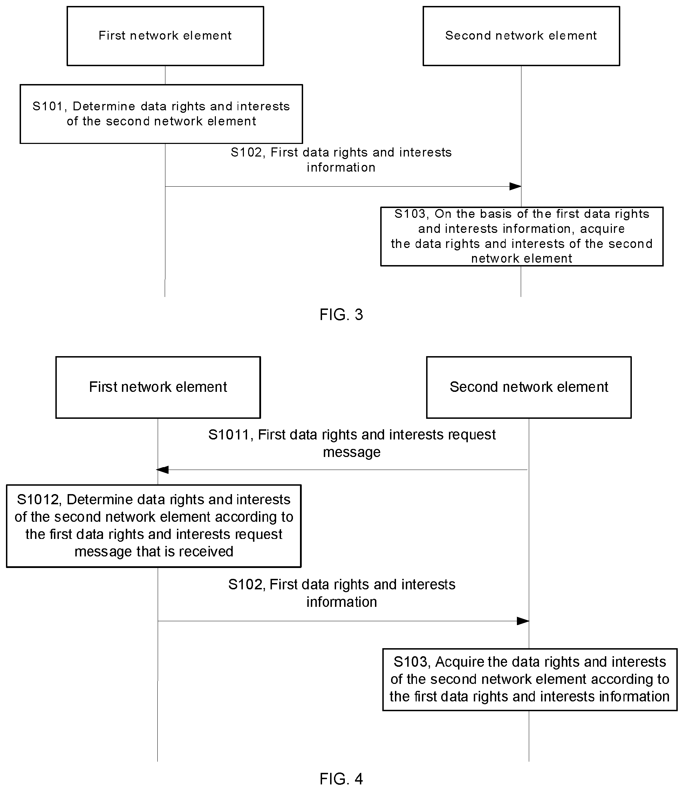

As shown in FIG. 3, the data rights and interests management method provided in the embodiment of the present disclosure may include the S101 to S103 as follows.

In S101, a first network element determines data rights and interests of a second network element.

It should be noted that, "network element" in the embodiments of the present disclosure, refers to a network element. For example, the network element may be a function, an entity, a node, a protocol layer, or a component, etc., which is not limited to the embodiments of the present disclosure.

In some embodiments, the above first network element includes at least one of: a core network, a radio access network, a business entity, a terminal device, a network management center, a network control center, a network data asset management network element, a rights and interests management network element, a rights and interests management center, a rights and interests management layer, a rights and interests management entity, a rights and interests management function, a rights and interests management component, or a rights and interests management agent.

Exemplarily, the above core network includes at least one of: a PCF, an AMF, an SMF, a UDM, a UDR, a UPF, or an NEF.

The above radio access network includes at least one of: a centralized unit (CU), a distributed unit (DU), a service data adaptation protocol (SDAP), a packet data convergence protocol (PDCP), a radio link control protocol (Radio Link Control, RLC), and a medium access control (MAC), an RAN capability exposure function, etc.

The above rights and interests management network element includes at least one of: a dedicated rights and interests network element, or a rights and interests enhanced network element formed by adding a rights and interests management function to an existing network element.

In some embodiments, the above second network element may include at least one of: a terminal device, a base station, a radio access network, a business entity, a core network, a third-party application, a capability exposure node, or an edge node.

Exemplarily, the above core network includes at least one of: a PCF, an AMF, an SMF, a UDM, a UDR, a UPF, or an NEF.

The above radio access network includes at least one of: a CU, a DU, an SDAP, a PDCP, an RLC, or an MAC.

The above edge node includes: MEC.

The above capability exposure node includes at least one of: an NEF or an RAN capability exposure network element.

In some embodiments, the data rights and interests of the second network element are used to characterize rights and interests of the second network element related to data generated by the second network element.

Exemplarily, the above data rights and interests includes at least one of: a data usage scope, a data privacy level, a data computing capability, a data ownership right, a data processing right, a data usage right, a data maintenance right, a data management right, a data privacy and security protection right, a data profit sharing strategy, a validity period of the data rights and interests, a life cycle of the data rights and interests, a data rights and interests type, a charging mode of the data rights and interests, a transaction mode of the data rights and interests, and an incentive obtained by the second network element for generating data.

Exemplarily, a type of the data rights and interests refers to different data corresponding to different data rights and interests. For example, different data rights and interests may be defined for structured data and unstructured data respectively. For example, different data rights and interests may be defined for data used for network optimization and data used for training artificial intelligence (Artificial Intelligence, AI) models. Therefore, the above first data rights and interests information may include multiple pieces of rights and interests information, and different pieces of rights and interests information may be configured for different types of data.

Exemplarily, the data computing capability refers to a computing capability used in a data generation process. For example, the base station includes the computing capability of the base station in a data rights and interests request message sent to a core network, and the core network determines data rights and interests information to the base station according to the computing capability reported by the base station.

It can be understood that, the core network includes multiple NFs. In the embodiments of the present disclosure, rights and interests management functions are added to these NFs, and rights and interests information may be transferred by calling service interfaces. For example, the first network element (e.g., a PCF, an SMF, a UPF or an AMF in the core network, etc.) is used for centralized rights and interests management, the second network element (e.g., an RNA node or a terminal, etc.) reports the rights and interests capability, and then the first network element allocates rights and interests.

Exemplarily, in a case where the first network element is the PCF and the second network element is a different entity, the above first network element determining the data rights and interests of the second network element may include: the PCF determining a data rights and interests of a user terminal; the PCF determining a data rights and interests of a base station; the PCF determining a data rights and interests of MEC; the PCF determining a data rights and interests of a third-party application; the PCF determining a data rights and interests of a data entity of a network participant, etc.

In some embodiments, as shown in FIG. 4, the above S101 may be implemented as S1011-S1012 as follows.

In S1011, a second network element sends a first data rights and interests request message to a first network element. Correspondingly, the first network element receives the first data rights and interests request message sent from the second network element.

The first data rights and interests request message carries at least one of following information: capability information related to the data rights and interests of the second network element; or data rights and interests expected to be obtained by the second network element.

Exemplarily, the capability information related to the data rights and interests of the second network element may be data and right-related tasks that the second network element may perform, such as data collection tasks or model training tasks, etc.

In some embodiments, the above S1011 may be implemented as that: a second network element sends a capability reporting message to a first network element; where the capability reporting message carries a data rights and interests request message.

In some embodiments, the above S1011 may be implemented as that: a second network element sends a connection establishment request message to a first network element; where the connection establishment request message carries a data rights and interests request message.

In some embodiments, the above S1011 may be implemented as that: a second network element sends a registration request message to a first network element; where the registration request message carries a data rights and interests request message.

In some embodiments, the above S1011 may be implemented as that: a second network element sends a rights and interests information request message to a first network element; where the rights and interests information request message carries a data rights and interests request message.

In some embodiments, the above S1011 may be implemented as that: in response to receiving an authentication request message sent from a first network element, a second network element sends a response message for the authentication request message to the first network element; where the response message for the authentication request message carries a data rights and interests request message.

In some embodiments, the above S1011 may be implemented as that: a second network element sends an authentication request message to a first network element; where the authentication request message carries a data rights and interests request message.

In S1012, the first network element determines data rights and interests of the second network element according to the first data rights and interests request message that is received.

Exemplarily, in a case where the first data rights and interests request message includes capability information related to the data rights and interests of the second network element, the first network element determines the data rights and interests of the second network element according to the capability information related to the data rights and interests of the second network element. For example, assuming that the second network element is capable of performing a task of collecting data, the first network element may determine the data rights and interests of the second network element according to a data content, a data type and/or a data volume that the second network element may collect.

Exemplarily, in a case where the first data rights and interests request message includes data rights and interests expected to be obtained by the second network element, the first network element determines the data rights and interests of the second network element according to the data rights and interests expected to be obtained by the second network element. For example, assuming that the second network element expects to obtain a usage right of data A, the first network element may determine the data rights and interests of the second network element by judging whether the second network element is qualified to be granted the usage right of the data A.

Exemplarily, in a case where the first data rights and interests request message includes the capability information of the second network element and the data rights and interests expected to be obtained by the second network element, the first network element determines the data rights and interests of the second network element according to the capability information of the second network element and the data rights and interests expected to be obtained by the second network element. For example, assuming that the second network element is capable of performing the task of collecting data A, and the second network element expects to obtain the usage right of the data A by performing the task of collecting data A, then the first network element may determine the data rights and interests of the second network element according to the information.

In S102, the first network element sends first data rights and interests information to the second network element. Correspondingly, the second network element receives the first data rights and interests information sent from the first network element.

The first data rights and interests information includes related information of data rights and interests of the second network element.

Exemplarily, the above first data rights and interests information includes one of:
information for data rights and interests configuration;
information for data rights and interests change; or
information for data rights and interests termination.

Exemplarily, the information for configuring the data rights and interests includes: a content of a data rights and interests that may be granted to the second network element, a configuration of a data rights and interests-related parameter, etc. For example, the information for configuring the data rights and interests includes: granting the second network element a right to know and a right to use the data A. For example, the information for configuring the data rights and interests includes: a profit-sharing ratio of the second network element from the profits generated by data B in commercial activities.

Exemplarily, the information for changing the data rights and interests includes: a data rights and interests that needs to be changed in the data rights and interests of the second network element, and a content of the change. For example, assuming that the second network element has the usage right to data A with a period of 3 months, the information for changing the data rights and interests may include: changing the period of the second network element's usage right, where the content of the change is extending the second network element's usage right to data A to 6 months.

Exemplarily, the information for changing the data rights and interests includes: changing to a planning and construction participation right of the network of the second network element. For example, in a case where the second network element is a super terminal or a specific network element node, the second network element, after negotiating with an operator and obtaining an authorization, may serve as a legitimate service node or a legitimate relay node. Simultaneously, the second network element may receive certain value feedback or rewards based on a rights and interests allocation change process and actual network planning and construction coverage contribution.

Exemplarily, the information for the data rights and interests change includes: changing a network maintenance assistance right of the second network element. For example, in a case where the second network element is a super terminal or a specific network element node, the second network element after negotiating with the operator and obtaining the authorization, may use its inherent intelligence to locally process and solve some network operation and maintenance optimization problems or provide the operator with reference suggestions and data corpora, etc. Simultaneously, the second network element may obtain certain value feedback or rewards based on the rights and interests allocation change process and the actual amount of network assistance optimization contribution.

Exemplarily, the information for the data rights and interests change includes: changing a service control leading right of the second network element. For example, in a case where the second network element is a super terminal or a specific network element node, the second network element, after negotiating with the operator and obtaining the authorization, may actively request and specify the expected resource strategies and RRC configurations for some specific service scenarios.

Exemplarily, the information for the data rights and interests termination includes: the data rights and interests that needs to be terminated among the data rights and interests of the second network element. For example, assuming that the second network element has the right to know about data A, the information for the data rights and interests termination may include: terminating the second network element's right to know about data A.

In some embodiments, the above S102 may be implemented as that: the first network element sends a second data rights and interests request message to the second network element, where the second data rights and interests request message carries the first data rights and interests information.

In some embodiments, the above S102 may be implemented as that: the first network element receives the first data rights and interests request message sent from the second network element, and sends a response message for the first data rights and interests request message to the second network element, where the response message for the first data rights and interests request message carries the first data rights and interests information.

In some embodiments, the above S102 may be implemented as that: the first network element receives a data service registration message sent from the second network element, and sends a response message for the data service registration message to the second network element, where the response message for the data service registration message carries the first data rights and interests information.

In some embodiments, the above S102 may be implemented as that: the first network element receives a service query message sent from the second network element, and sends a response message for the service query message to the second network element, where the response message for the service query message carries the first data rights and interests information.

In some embodiments, the above S102 may be implemented as that: the first network element sends a connection request message to the second network element, where the connection request message carries the first data rights and interests information.

In some embodiments, the above S102 may be implemented as that: the first network element receives a connection request message sent from the second network element, and sends a response message for the connection request message to the second network element, where the response message for the connection request message carries the first data rights and interests information.

In some embodiments, the above S102 may be implemented as that: the first network element sends a broadcast message, where the broadcast message carries the first data rights and interests information.

In some embodiments, the above S102 may be implemented as that: the first network element sends a system configuration message, where the system configuration message carries the first data rights and interests information.

In some embodiments, the above S102 may be implemented as that: the first network element sends quality of service (QoS) information, and transfers the first data rights and interests information in the QoS information or along with the QoS information. Exemplarily, the QoS information includes at least one of: a QoS characteristic parameter, a QoS profile, a QoS rule, and service-level agreement (SLA) subscription information.

Exemplarily, as shown in FIG. 2, in a case where the second network element is a UE, the first network element sends the QoS rule to the second network element, and includes the first data rights and interests information in the QoS rule (that is, the first data rights and interests information may be used as a parameter in the QoS rule). In a case where the second network element is an RAN, the first network element sends the QoS profile to the second network element, and includes the first data rights and interests information in the QoS profile (i.e., the first data rights and interests information may be used as a parameter in the QoS profile).

In some embodiments, the above S102 may be implemented as that: the first network element sends a packet, where a header of the packet carries the first data rights and interests information.

In some embodiments, the above S102 may be implemented as that: the first network element sends a packet, where a data area of the packet carries the first data rights and interests information.

In some embodiments, the above S102 may be implemented as that: the first network element sends an authentication message to the second network element, where the authentication message carries the first data rights and interests information.

In some embodiments, the above S102 may be implemented as that: the first network element sends a signaling message to the second network element, where the signaling message carries the first data rights and interests information, where the signaling message includes at least one of: a non-access stratum (NAS) message, a radio resource control (RRC) message, a system information (SI) message, and a QoS control message.

In some embodiments, in a case where the first network element and the second network element cannot communicate directly, the above S102 may be implemented as follows: sending the first data rights and interests information to the second network element through a third network element. Correspondingly, the second network element receives the first data rights and interests information sent from the first network element through the third network element.

Exemplarily, sending the first data rights and interests information to the second network element through the third network element may include the a1-a2 as follows.

In a1, the first network element sends the first data rights and interests information to a third network element. Correspondingly, the third network element receives the first data rights and interests information sent from the first network element.

In a2, the third network element sends the first data rights and interests information to the second network element. Correspondingly, the second network element receives the first data rights and interests information sent from the third network element.

Exemplarily, the above third network element includes at least one of: an AMF network element, an NEF network element, an access network capability exposure network element, a relay network element, a terminal device, a base station, a radio access network, a business entity, a third-party application, a capability exposure node, or an edge node.

Exemplarily, in a case where the first network element is a core network (e.g., a PCF network element or an SMF network element in the core network) and the second network element is a radio access network (e.g., a base station), the above S102 may be implemented as that:
the core network directly sends the first data rights and interests information to the base station; or
the core network sends the first data rights and interests information to the access network device through the AMF; or
the core network sends the QoS profile to the access network device; where the QoS profile includes the first data rights and interests information.

Exemplarily, in a case where the first network element is the core network (e.g., the PCF or SMF in the core network) and the second network element is the terminal device, the above S102 may be implemented as that:
the core network directly sends the first data rights and interests information to the terminal device; or
the core network sends the first data rights and interests information to the terminal device through the AMF network element; or
the core network sends the QoS rule to the terminal device; where the QoS rule message includes the first data rights and interests information; or
the AMF sends the NAS message to the terminal device; where the NAS message includes first data rights and interests information.

Exemplarily, in a case where the first network element is the core network (e.g., the PCF or SMF in the core network), the second network element is the third-party application (e.g., MEC), and the third network element is the NEF, the above S102 may be implemented as that: the PCF sends the first data rights and interests information to the MEC through the NEF.

In S103, the second network element acquires the data rights and interests of the second network element according to the first data rights and interests information.

Exemplarily, in a case where the first data rights and interests information includes configuration information of the data rights and interests, the second network element acquires the data rights and interests granted to the second network element according to the configuration information of the data rights and interests.

Exemplarily, in a case where the first data rights and interests information includes information on changes in data rights and interests, the second network element obtains the data rights and interests that need to be changed from the data rights and interests of the second network element according to the information on changes in data rights and interests.

Exemplarily, when the first data rights and interests information includes information on the termination of data rights and interests, the second network element obtains the data rights and interests that need to be terminated from the data rights and interests of the second network element according to the information on the termination of rights and interests.

It can be understood that, the data rights and interests management method provided in the embodiments of the present disclosure, the data rights and interests generated in the network is managed by defining standardized first data rights and interests information, the data rights and interests of the network element in the network is specified for various types of data, which may enhance the value of various types of data in the network.

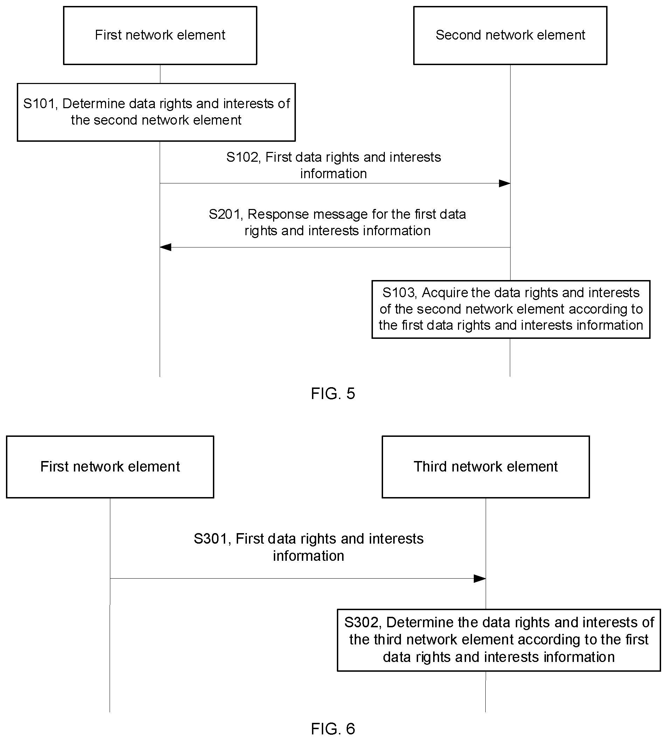

In some embodiments, as shown in FIG. 5, before the above S103, the method further includes the S201 as follows.

In S201, the second network element sends a response message for the first data rights and interests information to the first network element. Correspondingly, the first network element receives the response message for the first data rights and interests information and sent from the second network element.

The response message for the first data rights and interests information includes at least one of:
a rights and interests feedback message, where the rights and interests feedback message includes a feedback response from the second network element on whether to accept a content indicated by the first data rights and interests information;
a rights and interests negotiation request, where the rights and interests negotiation request includes a request from the second network element to modify the first data rights and interests information;
second data rights and interests information, where the second data rights and interests information is rights and interests assistance information for the second network element to assist the first network element in determining the first data rights and interests information;
an effect feedback message; where the effect feedback information includes reporting feedback from the second network element on an execution effect of a task corresponding to the first data rights and interests information.

It can be understood that, in a case where the first data rights and interests information does not satisfy an expectation of the second network element, the second network element may generate the second data rights and interests information to assist the first network element in determining the first data rights and interests information. Exemplarily, the second data rights and interests information may include a recommendation value from the second network element for the first data rights and interests information.

In some embodiments, the second network element sends a response message for the first data rights and interests information to the first network element through the third network element.

Exemplarily, in a case where the first network element is the core network (e.g., the PCF or SMF in the core network) and the second network element is a radio access network device (e.g., a base station), the base station sends the response message for the first data rights and interests information to the SMF (taking an example of the core network) through the AMF.

Exemplarily, in a case where the first network element is the core network (e.g., the PCF or SMF in the core network) and the second network element is a terminal device, the terminal device sends the response message for the first data rights and interests information to the SMF through the AMF.

Exemplarily, in a case where the first network element is the core network (e.g., the PCF network element or SMF network element in the core network) and the second network element is the third-party application (e.g., MEC), the MEC sends the response message for the first data rights and interests information to the core network through the NEF network element.

In some other embodiments, as shown in FIG. 6, the above method further includes as follows.

In S301, a first network element sends the first data rights and interests information to a third network element; correspondingly, the third network element receives the first data rights and interests information.

In S302, the third network element determines data rights and interests of the third element according to the first data rights and interests information.

Exemplarily, the third network element may determine the data rights and interests of the second network element according to the first data rights and interests information; infer the data rights and interests of the third network element according to the data rights and interests of the second network element; and then, the third network element may also apply for data rights and interests of a third node.

In some embodiments, in a case where the second network element and the third network element belong to a same type of network element, the third network element may use the data rights and interests of the third network element based on the rights and interests of the second network element. Exemplarily, assuming that the first network element is the core network, the second network element is a UE1, and the third network element is a UE2; if a data rights and interests of the UE1 determined by the core network include rights and interests related to the Al model, then UE2 may use the Al model of the UE1 according to the data rights and interests of the UE1.

It can be understood that, the data rights and interests management method provided in the embodiments of the present disclosure, the data rights and interests may be clarified through the exchange of data rights and interests information between various network elements, thereby enhancing the value of various types of network data.

For ease of understanding, the data rights and interests management information provided in the embodiments of the present disclosure will be described below by taking different scenarios as examples respectively.

Scenario 1, the first network element is the core network (e.g., the PCF network element or SMF network element in the core network), the second network element is the UE, and the third network element is the AMF.

Exemplarily, in Scenario 1, the data rights and interests management method provided in the embodiments of the present disclosure may be implemented as b1-b4 as follows.

In b1, a UE sends a first data rights and interests request message to a core network.

Exemplarily, the first data rights and interests request message includes at least one of: capability information related to data rights and interests of the UE, or data rights and interests expected to be obtained by the UE.

Exemplarily, the UE may use a NAS message to send the first data rights and interests request message to the core network, that is, the UE sends the NAS message to the core network, where the NAS message carries the first data rights and interests request message.

In b2, the core network determines the data rights and interests of the UE according to the first data rights and interests request message sent from the UE.

In b3, the core network generates data rights and interests information of the UE according to the data rights and interests of the UE and sends the data rights and interests information of the UE to the UE.

Exemplarily, the b3 may be implemented as that: the core network sends a QoS rule to the UE through the AMF, and the QoS rule carries the data rights and interests information of the UE (i.e., the data rights and interests information of the UE may be a parameter of the QoS rule).

Exemplarily, the b3 may also be implemented as that: the core network sends a signaling message to the UE, where the signaling message carries the data rights and interests information of the UE.

In b4, the UE acquires the data rights and interests of the UE according to the data rights and interests information of the UE.

Scenario 2, the first network element is the core network (e.g., the PCF network element or SMF network element in the core network), the second network element is the base station, and the third network element is the AMF.

Exemplarily, in Scenario 2, the data rights and interests management method provided in the embodiments of the present disclosure may be implemented as c1- c4 as follows.

In c1, a base station sends a first data rights and interests request message to a core network.

Exemplarily, the first data rights and interests request message includes at least one of: capability information related to data rights and interests of the base station, or data rights and interests expected to be obtained by the base station.

Exemplarily, the base station sends the first data rights and interests request message to the core network through the AMF.

In c2, the core network determines the data rights and interests of the base station according to the first data rights and interests request message sent from the base station.

In c3, the core network generates data rights and interests information of the base station according to the data rights and interests of the base station and sends the data rights and interests information of the base station to the base station.

Exemplarily, the c3 may be implemented as that: the core network sends a QoS profile to the base station through the AMF, where the QoS profile carries the data rights and interests information of the base station (i.e., the data rights and interests information of the base station may serve as a parameter of the QoS profile).

Exemplarily, the c3 may also be implemented as that: the core network sends a signaling message to the base station, where the signaling message carries the data rights and interests information of the base station.

In c4, the base station acquires the data rights and interests of the base station according to the data rights and interests information of the base station.

Scenario 3, the first network element is the core network (e.g., the PCF network element or SMF network element in the core network), the second network element is the third-party application, and the third network element is NEF.

Exemplarily, in Scenario 3, the data rights and interests management method provided in the embodiments of the present disclosure may be implemented as d1- d4 as follows.

In d1, a third-party application sends a first data rights and interests request message to a core network.

Exemplarily, the first data rights and interests request message includes at least one of: capability information related to data rights and interests of the third-party application, or data rights and interests expected to be obtained by the third-party application.

Exemplarily, in a case where the third-party application is deployed on an edge node MEC, the third-party application may send the first data rights and interests request message to the core network through the NEF network element.

For example, the third-party application may send a capability reporting message to the core network through the NEF, where the capability reporting message includes the first data rights and interests request message.

In d2, the core network determines data rights and interests of the third-party application according to the first data rights and interests request message sent from the third-party application.

Exemplarily, assuming that the third-party application has the capabilities of performing data analysis and Al inference using network data and optimizing network performance, the core network may determine the data rights and interests of the third-party application according to such capabilities, ensuring that the network is exposed to the third-party application in a secure mode and in this way, the third-party application is also willing to actively assist in network optimization due to the incentives obtained.

In d3, the core network generates data rights and interests information of the third-party application according to the data rights and interests of the third-party application and sends the data rights and interests information of the third-party application to the third-party application.

Exemplarily, in a case where the third-party application is deployed on an edge node MEC, the core network may send the data rights and interests information of the third-party application to the third-party application through NEF.

Exemplarily, the core network may send the data rights and interests information of the third-party application to the third-party application through an RAN capability exposure function. For example, the third-party application sends a request message of the RAN capability exposure function to the core network; correspondingly, the core network receives the request message of the RAN capability exposure function and sends a response message for the request message of the RAN capability exposure function to the third-party application; and carries the data rights and interests information of the third-party application in the response message for the request message of the RAN capability exposure function, and carries the capabilities that the RAN exposes for the third-party application in the data rights and interests information of the third-party application, as well as the data rights and interests that the third-party application has (e.g., the third-party application has a right to process the data exposed by the RAN, but does not have a ownership right.).

In d4, the third-party application acquires the data rights and interests of the third-party application according to the data rights and interests information of the third-party application.

Scenario 4, the first network element is the core network (e.g., the PCF network element or SMF network element in the core network), the second network element is a network entity A, and the third network element is the AMF.

Exemplarily, in Scenario 4, the data rights and interests management method provided in the embodiments of the present disclosure may be implemented as e1- e4 as follows.

In e1, a network entity A sends a first data rights and interests request message to a core network.

Exemplarily, the network entity A may be a base station, a terminal, a third-party application, an intelligent network node, an integrated access backhaul (IAB) node, a satellite network node, etc.

Exemplarily, the first data rights and interests request message includes at least one of: capability information related to data rights and interests of the network entity A, or data rights and interests expected to be obtained by the network entity A.

Exemplarily, the network entity A sends the first data rights and interests request message to the core network through the AMF network element. For example, the network entity A sends an authentication request message to the core network through the AMF, where the authentication request message includes a first data rights and interests request message; or the network entity A sends a response message for the authentication request message and sent from the core network to the core network through the AMF, where the response message for the authentication request message includes a first data rights and interests request message.

In e2, the core network determines the data rights and interests of the network entity A according to the first data rights and interests request message sent from the network entity A.

In e3, the core network generates data rights and interests information of the network entity A according to the data rights and interests of the network entity A and sends the data rights and interests information of the network entity A to the network entity A.

Exemplarily, the core network may the send data rights and interests information of the network entity A to the network entity A through the AMF.

Exemplarily, the core network may send a broadcast message, where the broadcast message includes the data rights and interests information of the network entity A.

In e4, the network entity A acquires the data rights and interests of the network entity A according to the data rights and interests information of the network entity A.

In some other embodiments, exemplarily, the network entity A may register data rights and interests-related service capabilities with the core network, and then the core network determines the data rights and interests of the network entity A according to the data rights and interests-related server capabilities registered by the network entity A. When a network entity B calls the data service of the network entity A, the core network may send the data rights and interests information of the network entity A to the network entity B, to inform the network entity B about the data rights and interests of the network entity A.

Scenario 5, the first network element is the base station, and the second node is the UE.

Exemplarily, in Scenario 5, the data rights and interests management method provided in the embodiments of the present disclosure may be implemented as f1- f4 as follows.

In f1, a UE sends a first data rights and interests request message to a base station.

Exemplarily, the first data rights and interests request message includes at least one of: capability information related to data rights and interests of the UE, or data rights and interests expected to be obtained by the UE.

Exemplarily, the UE may send a first data rights and interests request message to the base station through an air interface signaling. For example, the UE sends a measurement reporting message to the base station, where the measurement reporting message carries the first data rights and interests request message.

In f2, the base station determines data rights and interests of the UE according to the first data rights and interests request message sent from the UE.

In some embodiments, the power of decision for data rights and interests rests with the core network. The base station, after receiving the first data rights and interests request message sent from the UE, sends the first data rights and interests request message to the core network, and the core network then determines the data rights and interests of the UE and, the core network then sends the data rights and interests of the UE to the base station.

In f3, the base station generates data rights and interests information of the UE according to the data rights and interests of the UE and sends the data rights and interests information of the UE to the UE.

Exemplarily, the base station sends a signaling message to the UE, where the signaling message carries the data rights and interests information of the UE. The signaling message may be an RRC message, such as an RRC configuration message or an RRC reconfiguration message, etc.

Exemplarily, the base station may send a broadcast message, where the broadcast message carries the data rights and interests information of the UE. The broadcast message may be SI or a broadcast channel, etc.

For example, the base station may send the broadcast message, to solicit UEs that may actively perform measurement or perform data collection. To encourage participation, the broadcast message carries the data rights and interests information of the UE, where the data rights and interests information of the UE includes the data rights and interests that the UE may obtain by performing a measurement reporting task or a data collection task (for example, the data obtained through measurement reporting or collection belongs to the base station, but the UE that performs data tasks such as measurement reporting or data collection may be entitled to some rewards).

The UE, after receiving the data rights and interests information of the UE, may send a response message to the base station and the response message includes whether the UE accepts the data rights and interests information and whether it wants to negotiate modifications. If the UE accepts the data rights and interests information sent from the base station, the UE needs to provide corresponding data services and conduct the division of data rights subjects and distribution of interests according to the data rights and interests information. If the UE does not accept a data rights and interests indication sent from the base station, the UE may also initiate a rights and interests negotiation request to the base station to suggest that the base station modify the mode of dividing the data rights subjects, content objects of rights and interests, and the distribution of interests, etc.

The UE sends a connection request message to the base station, and carries a response message for the data rights and interests information of the UE in the connection request message. In a case where the response message includes a rights and interests negotiation request, the base station may send a response message for the connection request message to the UE, and carry data rights and interests information that is determined in the response message for the connection request message.

Exemplarily, in SON or MDT, the base station may send the broadcast message for issuing a measurement task, and the broadcast message carries the data rights and interests information of the UE. The data rights and interests information of the UE may include rights and interests allocation strategies, which clarify that the data belongs to the operator, but the UE that performs the measurement task may receive a reward. The terminal receiving a benefit distribution strategy sends a response message, indicating that the terminal is willing to accept the data collection task.

In f4, the UE acquires the data rights and interests of the UE according to the data rights and interests information of the UE.

Scenario 6, a rights and interests management of a data service.

In recent years, increasing attention has been paid to the value mining and application of massive network data. With the development of technologies such as big data, artificial intelligence, and integrated communication and sensing, data is exhibiting characteristics of being multi-dimensional, ubiquitous, temporal, and correlated. 6G networks need to provide data service capabilities that enable distributed collaboration, facilitate value realization, and prioritize security and privacy. Data services are provided by various data entities in the network, and the entities directly associated with data include the third-party application, the core network, the radio access network, the terminal, the transmission network, and the digital platform, etc.

Therefore, when providing data services, 6G networks may perform rights and interests management of data by delivering data rights and interests information.

In some embodiments, in a stage of the network service registration, the data rights and interests information may be carried in the data service registration message. Exemplarily, take an example in which a first node is the core network (e.g., an NRF network element in the core network) and a second node is the base station for explanation. The base station may send a data service registration message to the core network (the base station registers the data service capabilities that the base station may provide with the core network through the data service registration message) and carry the data rights and interests request message in the data service registration message, where the data rights and interests request message includes information such as a charging model for using the data service, a confirmation of a right to newly generated data in a data service process (e.g., an ownership right, a processing right, a usage right, etc.), and distribution of benefits obtained from providing the data service. The core network performs determining for rights and interests on the data services of the base station and sends rights and interests information corresponding to the data service to the base station through a response message for the data service registration. The core network may acquire and store the data rights and interests corresponding to each registered data service by receiving the data service registration message.

In some other embodiments, during network operation, unauthorized or malicious invocation of data services may be avoided through the authorization of data services. For example, the network entity B, which provides data services, carries data rights and interests information in the data service registration message. If a terminal wants to call the data service of the network entity, the network (e.g., the core network or network management center, etc.) needs to judge whether the terminal satisfies an authorization strategy according to the data rights and interests information of the data service of the network entity B carried in the data service registration message that is received; for the terminal that satisfies the authorization strategy, access is allowed and authorized to use the data service of the network entity B; for the terminal that does not satisfy the authorization strategy, calling the data service of the network entity B is not allowed.

In some other embodiments, in a data service discovery stage, data rights and interests information may be carried in the response message for the data service request message. Exemplarily, the third-party application sends the data service request message to the core network through the NEF; the core network queries the data services and data rights and interests thereof stored in the core network, and sends the data rights and interests information of the data service to the third-party application (for example, the core network may send a response message for the data service request message to the third-party application, and carries the data rights and interests information of the data service in the response message). The third-party application, after receiving the data rights and interests information of the data service sent from the core network, pays the relevant fees to the operator when using the data rights and interests and the operator then shares the benefits with the data service provider according to the data revenue sharing strategy.

In some other embodiments, in the data service authentication stage, data rights and interests information may be transmitted according to data service authentication message (such as the authentication message, etc.). Exemplarily, the terminal carries a data rights and interests request for the terminal security and privacy protection in the authentication request message. Correspondingly, the core network carries the data rights and interests information for the terminal in the authentication message.

In some other embodiments, before data collection, the data management center needs to acquire data rights and interests information of a collection device (e.g., a sensor) to clarify rights, such as an ownership right of data, a processing right of data, a usage right of data, etc. Exemplarily, in a sensor sensing scenario, the data management center may first acquire data rights and interests of the sensor through a dedicated rights and interests message or a message for confirming rights, and then collect data. Manners for the data management center acquiring data rights and interests of sensors includes: from the rights and interests management network element (e.g., the rights and interests contract database); the data management center sends a request message of the data rights and interests information or a configuration message of the data rights and interests information to the sensor and receives a response message from the sensor, and carries the data rights and interests information of the sensor in the response message.

The above data management center may include at least one of: an NWDAF, an MDAF, a novel network element, a data plane network element, or a 6G novel data management entity. The rights and interests management network element may include at least one of: a data management center, an NRF, a UDM, a core network element, a novel network element, a data plane network element, or a 6G novel data management entity.

In some other embodiments, in a process that a data analysis network element performs data analysis and model training, feature datasets and data models are generated, and these datasets and data models also need to be subject to rights and interests management. That is, a rights and interests management center network element, in addition to sending data rights and interests information of a data collection network element to the data analysis network element, also needs to negotiate the data rights and interests of the data analysis network element.

Exemplarily, the data analysis network element, after receiving the data rights and interests information corresponding to the data collection network element sent from the rights and interests management center network element, sends the data rights and interests request information of the data analysis network element to the rights and interests management center network element (the data rights and interests request information includes: requests for rights such as the ownership right, a profit-sharing strategy, and a transaction settlement mode, etc., of feature data sets and/or data models generated in the data analysis process); correspondingly, the rights and interests management center network element determines the data rights and interests of the data analysis network element according to the data rights and interests request information of the data analysis network element, and sends the data rights and interests information of the data analysis network element to the data analysis network element (for example, the rights and interests management center network element sends the broadcast message, where the broadcast message includes the data rights and interests information of the data analysis network element).

The above rights and interests management center network element may include at least one of: a core network element (such as a PCF, an SMF, a UDM, a UPF, or a UDR, etc.) and a novel network element (such as a data plane management network element). The data analysis network element may include at least one of: a core network element (e.g., an NWDAF network element) and a novel network element (e.g., a data plane analysis network element).

Scenario 7, introduce a rights and interests management network element, and the rights and interests management network element performs rights and interests management.

In some embodiments, the network entity may perform data rights and interests management through interaction of data rights and interests-related information with the rights and interests management network element.

Exemplarily, the rights and interests management network element may be a function, an entity, a node, a protocol layer, or a component, etc., related to the rights and interests. For example, the rights and interests management network element may be a rights and interests management function, a rights and interests management entity, a rights and interests management node, a rights and interests management layer, or a rights and interests management component. For example, the rights and interests management network element may include at least one of: a task manager, a network controller, a core network function, a radio access network, a novel network management entity, a novel protocol layer, or a novel component, etc. From a typological perspective, the rights and interests management network element includes, but is not limited to: a dedicated rights and interests network element (e.g., a rights and interests execution network elements, a rights and interests acquisition network element, a rights and interests reporting network element, a rights and interests request network element), or an enhanced network element formed by adding a rights and interests management function to an existing network element, etc.

Exemplarily, the rights and interests management network element may be a new network function of the core network; or the rights and interests management network element may be a part of the core network function; or the rights and interests management network element may be deployed together with the core network function; for example, the rights and interests management network element may be deployed at the CU, DU, PDCP layer, RLC layer, MAC layer or as an independent functional protocol layer.

Exemplarily, from a network layer perspective, the rights and interests management network element may be a centralized rights and interests management network element, or a rights and interests management network element may be a multi-level, multi-layered management network element. For example, the core network serves as the centralized rights and interests management network element. As an another example, the core network, as a first-level rights and interests management network element, is responsible for the rights and interests management of the entire network; the base station, as a second-level rights and interests management network element, performs radio-side rights and interests management under the authorization of the core network; and the terminal, as a third-level rights and interests management network element, performs rights and interests negotiation and interaction between terminals under the authorization of the core network and/or the base station.

Exemplarily, the rights and interests management network element may also be a distributed rights and interests management network element, where respective network elements have certain capabilities for rights and interests formulation, rights and interests negotiation, and rights and interests trading. For example, each terminal has certain data rights and interests, and data rights and interests transactions are performed between terminals.

Exemplarily, the rights and interests management network element may also be an enhanced network element, such as adding a rights and interests management unit to the CU to form a CU enhanced network element with the rights and interests management function.

Scenario 8, Lifecycle management of data rights and interests.

In a process of the generation and elimination process of data, data rights and interests may also change. The validity period of data rights and interests and lifecycle of data rights and interests may be independent of the lifecycle of data, that is, the lifecycle management of data rights and interests includes a lifecycle management from the generation of rights and interests to the elimination of rights and interests. The rights and interests of data may terminate during the data's existence, and the rights and interests of data may still exist when the data is eliminated. For example, a terminal provides measurement data to a network management center, and the network management center grants the terminal a one-month profit-sharing right for the measurement data; after one month, the network management center terminates the profit-sharing right for the measurement data of the terminal and provides the data to other network entities for free use. For example, an operator provides data to a third-party Al model training platform for Al model training, to generate an Al model. Exemplarily, the third-party Al model training platform first sends data rights and interests request information to the operator (requesting to acquire the corresponding data usage right for training the Al model); correspondingly, the operator determines the data rights and interests of the third-party Al model training platform according to the data rights and interests request information sent from the third-party Al model training platform, and sends data rights and interests information of the third-party Al model training platform. The data rights and interests information specifies that: the operator provides data to the third-party Al model training platform, the third-party Al model training platform has the usage right to the data, but the ownership of the data belongs to the operator; the Al model generated by the third-party Al model training platform by training data belongs to the third-party Al model training platform, but the operator has a certain period of profit-sharing right for the Al model. It can be seen from the provisions in the data rights and interests information that even if the data provided by the operator is no longer used, the data rights and interests may still exist for a period of time (e.g., the operator has a certain period of profit-sharing right for the Al model).

Scenario 9, rights and interests management of novel network elements.

With the development of technology, various novel-type network elements will emerge in the future, and these novel-type network elements will bring novel value benefits to the network. For example, intelligent super terminals may perform important wireless network coverage, relay services and collaborative work, etc., in local area scenarios. Exemplarily, determining the rights and interests of intelligent super terminal may be implemented as that: the network or operator first determines data rights and interests of the intelligent super terminal based on capability information reported by the intelligent terminal, and then sends data rights and interests information belonging to the intelligent super terminal to the intelligent terminal. In this way, it may encourage the intelligent super terminal to provide assistance network services to maximize the utilization of terminal resources, and simultaneously, the intelligent super terminal may also obtain certain value feedback benefits by receiving the data rights and interests information.

In some embodiments, the self-deployment of novel network element nodes may alleviate the deployment difficulties for operators. For example, the novel network element node may include at least one of: reconfigurable intelligence surface (RIS), a home small base station or an enterprise small base station, or a roadside device. Exemplarily, the operator encourages building properties to apply RIS patches on external glass walls of buildings by granting data rights and interests to building properties; the operator encourages families or enterprises to build flexibly deployed small base stations (under the jurisdiction of families or enterprises) to improve network coverage capabilities by negotiating with families or enterprises to enable them to have data rights and interests of self-built base stations. Through the process of data rights and interests confirmation, data rights and interests information transfer for the above novel network elements, and the acquisition of data rights and interests by novel network elements, the rights and interests management gives full play to the value of network participants, and reduces the network construction procurement costs and the pressure of overall network planning and construction, maintenance and optimization of telecom operators.

Scenario 10, data rights and interests information transactions.

With the future deployment of space-air-ground integration, ground telecom operators may use satellite antenna resources of satellite operators to achieve radio coverage in remote or special areas, and satellite operators may also share and utilize the surplus computing resources of ground telecom operators. When performing data interaction between different operators, it is necessary to transmit data rights and interests information, know about data rights and interests transaction rules, charging modes and data transaction modes through data rights and interests information, so as to perform commercial transactions based on data rights and interests information.

The above introduces the solutions of the embodiments of the present disclosure mainly from the perspective of the method. It can be understood that in order to achieve the functions mentioned above, a data rights and interests management apparatus contains at least one of corresponding hardware structures or software modules for performing respective functions. Those skilled in the art should easily realize that the embodiments of the present disclosure can be implemented in the form of hardware or a combination of hardware and computer software, in combination with the units and algorithm steps of various examples described in the embodiments disclosed herein. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the embodiments of the present disclosure.

It can be understood that, the data rights and interests management apparatus includes the corresponding hardware structures and/or software modules for performing various functions in order to implement the above functions. Those skilled in the art should easily recognize that the present disclosure can be implemented in the form of hardware or a combination of hardware and computer software, in conjunction with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the data rights and interests management apparatus may be divided into functional modules according to the above-mentioned method embodiments, and for example, each functional module may be divided corresponding to each function, or two or more functions may be integrated into one functional module. The above integrated module is implemented in the form of hardware or in the form of software. It should be noted that the division of modules in the embodiments of the present disclosure is illustrative, and is merely a kind of logical functional division, and there may be other division methods in actual implementations. The example in which each functional module is divided corresponding to each function, is taken for explanation below.

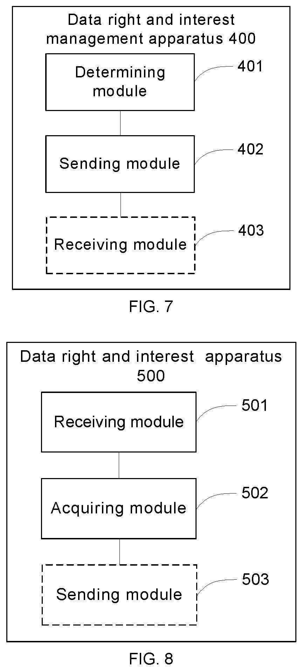

FIG. 7 is a structural schematic diagram of a data rights and interests management apparatus provided in the embodiments of the present disclosure, where the data rights and interests management apparatus is applied to a first network element and configured to perform the data rights and interests management method provided in the above method embodiments. As shown in FIG. 7, the data rights and interests management apparatus 400 includes: a determining module 401 and a sending module 402. In some other embodiments, the data rights and interests management apparatus 400 may further include a receiving module 403.

The determining module 401, is configured to determine data rights and interests of a second network element, where the data rights and interests of the second network element are used to characterize rights and interests of the second network element related to data generated by the second network element.

The sending module 402, is configured to send first data rights and interests information to the second network element, where the first data rights and interests information includes related information of data rights and interests of the second network element.

In some embodiments, the data rights and interests include at least one of: a data usage scope, a data privacy level, a data computing capability, a data ownership right, a data processing right, a data usage right, a data maintenance right, a data management right, a data privacy and security protection right, a data profit sharing strategy, a validity period of the data rights and interests, a life cycle of the data rights and interests, a data rights and interests type, a charging mode of the data rights and interests, a transaction mode of the data rights and interests, and an incentive obtained by the second network element for generating data.

In some embodiments, the first data rights and interests information includes one of:
information for data rights and interests configuration;
information for data rights and interests change;
information for data rights and interests termination.

In some embodiments, the determining module 401, is configured to receive a first data rights and interests request message sent from the second network element; where the first data rights and interests request message carries at least one of following information: capability information related to the data rights and interests of the second network element; or data rights and interests expected to be obtained by the second network element; and determine the data rights and interests of the second network element according to the first data rights and interests request message.

In some embodiments, the receiving module 403, is configured to receive a response message for the first data rights and interests information and sent from the second network element, where the response message for the first data interest information includes at least one of: a rights and interests feedback message, where the rights and interests feedback message includes a feedback response from the second network element on whether to accept a content indicated by the first data rights and interests information; a rights and interests negotiation request, where the rights and interests negotiation request includes a request from the second network element to modify the first data rights and interests information; second data rights and interests information, where the second data rights and interests information is rights and interests assistance information for the second network element to assist the first network element in determining the first data rights and interests information; an effect feedback message; where the effect feedback information includes a reporting feedback from the second network element on an execution effect of a task corresponding to the first data rights and interests information.

In some embodiments, the sending module 402, is configured to send a second data rights and interests request message to the second network element, where the second data rights and interests request message carries the first data rights and interests information; or receive a first data rights and interests request message sent from the second network element, and send a response message for the first data rights and interests request message to the second network element, where the response message for the first data rights and interests request message carries the first data rights and interests information; or receive a data service registration message sent from the second network element, and send a response message for the data service registration message to the second network element, where the response information of the data service registration message carries the first data rights and interests information; or receive a service query message sent from the second network element, and send a response message for the data service query message to the second network element, where the response message for the data service query message carries the first data rights and interests information; or send a connection request message to the second network element, where the connection request message carries the first data rights and interests information; or receive a connection request message sent from the second network element, and send a response message for the connection request message to the second network element, where the response message for the connection request message carries the first data rights and interests information; or send a broadcast message, where the broadcast message carries the first data rights and interests information; or send a system configuration message, where the system configuration message carries the first data rights and interests information; or send quality of service (QoS) information, where the QoS information carries the first data rights and interests information; or send a packet, where a header of the packet carries the first data rights and interests information; or send a packet, where a data area of the packet carries the first data rights and interests information; or send an authentication message to the second network element, where the authentication message carries the first data rights and interests information.

In some embodiments, the above QoS information includes at least one of: a QoS characteristic parameter, a QoS profile, a QoS rule, or service-level agreement (SLA) subscription information.

In some embodiments, the sending module 402, is configured to send a signaling message to the second network element, where the signaling message carries the first data rights and interests information, and the signaling message includes at least one of: a non-access stratum (NAS) message, a radio resource control (RRC) message, a system information (SI) message, or a QoS control message.

In some embodiments, the sending module 402, is configured to send the first data rights and interests information to the second network element through a third network element.

In some embodiments, the sending module 402, is further configured to send the first data rights and interests information to a third network element, so as to enable the third network element to determine data rights and interests of the third network element according to the first data rights and interests information.

In some embodiments, the third network element includes at least one of: an access and mobility management function (AMF) network element, a network exposure function (NEF) network element, an access network capability exposure network element, a relay network element, a terminal device, a base station, a radio access network, a business entity, a third-party application, a capability exposure node, or an edge node.

In some embodiments, the first network element includes at least one of: a core network, a radio access network, a business entity, a terminal device, a network management center, a network control center, a network data asset management network element, a rights and interests management network element, a rights and interests management center, a rights and interests management layer, a rights and interests management entity, a rights and interests management function, a rights and interests management component, or a rights and interests management agent.

In some embodiments, the core network includes at least one of: a policy control function (PCF), an access and mobility management function (AMF), a session management function (SMF), a unified data management (UDM), a unified data repository (UDR), a user plane function (UPF), or a network exposure function (NEF); the radio access network includes at least one of: a centralized unit (CU), a distributed unit (DU), a service data adaptation protocol (SDAP), a packet data convergence protocol (PDCP), a radio link control (RLC), or a medium access control (MAC); the rights and interests management network element includes at least one of: a dedicated rights and interests network element, or a rights and interests enhanced network element formed by adding a rights and interests management function to an existing network element.

In some embodiments, the second network element includes at least one of: a terminal device, a base station, a radio access network, a business entity, a core network, a third-party application, a capability exposure node, or an edge node.

In some embodiments, the core network includes at least one of: a PCF, an AMF, an SMF, a UDM, a UDR, a UPF, or an NEF; the radio access network includes at least one of: a CU, a DU, an SDAP, a PDCP, an RLC, or an MAC; the edge node includes: mobile edge computing (MEC); the capability exposure node includes at least one of: an NEF or an RAN capability exposure network element.

FIG. 8 is a structural schematic diagram of a data rights and interests management apparatus provided in the embodiments of the present disclosure, where the data rights and interests management apparatus is applied to a second network element and configured to perform the data rights and interests management method provided in the above method embodiments. As shown in FIG. 8, the data rights and interests management apparatus 500 includes: a receiving 501 and an acquiring module 502. In some other embodiments, the data rights and interests management apparatus 500 may further include a sending module 503.

The receiving module 501, is configured to receive first data rights and interests information sent from a first network element, where the first data rights and interests information includes related information of data rights and interests of the second network element, the data rights and interests are used to characterize rights and interests of the second network element related to data generated by the second network element.

The acquiring module 502, is configured to acquire data rights and interests of the second network element according to the first data rights and interests information.

In some embodiments, a content of the data rights and interests includes at least one of: a data usage scope, a data privacy level, a data computing capability, a data ownership right, a data processing right, a data usage right, a data maintenance right, a data management right, a data privacy and security protection right, a data profit sharing strategy, a validity period of the data rights and interests, a data rights and interests type, a charging mode of the data rights and interests, a transaction mode of the data rights and interests, and an incentive obtained by the second network element for generating data.

In some embodiments, the first data rights and interests information includes at least one of:
information for data rights and interests configuration;
information for data rights and interests change; or
information for data rights and interests termination

In some embodiments, the sending module 503, is configured to send a first data rights and interests request message to the first network element, where the first data rights and interests request message includes at least one of: capability information related to the data rights and interests of the second network element; or data rights and interests expected to be obtained by the second network element.

In some embodiments, the sending module 503, is configured to send a capability reporting message to the first network element, where the capability reporting message includes the first data rights and interests request message; or send a connection establishment request message to the first network element, where the connection establishment request message includes the first data rights and interests request message; or send a registration request message to the first network element, where the registration request message includes the first data rights and interests request message; or send an authentication request message to the first network element, where the authentication request message includes the first data rights and interests request message; or send a response message for the authentication request message and sent from the first network element to the first network element, where the response message for the authentication request message includes the first data rights and interests request message.

In some embodiments, the receiving module 501, is configured to receive a second data rights and interests request message sent from the first network element, where the second data rights and interests request message carries the first data rights and interests information; or receive a response message for a first data rights and interests request message and sent from the first network element, where the response message for the first data rights and interests request message carries the first data rights and interests information; or receive a response message for a service registration message and sent from the first network element, where the response message for the service registration message carries the first data rights and interests information; or receive a response message for a service query message and sent from the first network element, where the response message for the service query message carries the first data rights and interests information; or receive a connection request message sent from the first network element, where the connection request message carries the first data rights and interests information; or receive a response message for a connection request message and sent from the first network element, where the response message for the connection request message carries the first data rights and interests information; or receive a broadcast message sent from the first network element, where the broadcast message carries the first data rights and interests information; or receive a system configuration message sent from the first network element, where the system configuration message carries the first data rights and interests information; or receive QoS information sent from the first network element, where the QoS information carries the first data rights and interests information; or receive a packet sent from the first network element, where a header of the packet carries the first data rights and interests information; or receive a packet sent from the first network element, where a data area of the packet carries the first data rights and interests information; or receive an authentication message sent from the first network element, where the authentication message carries the first data rights and interests information or receive a connection request message sent from the first network element, where the connection request message carries the first data rights and interests information.

In some embodiments, the QoS information includes at least one of: a QoS characteristic parameter, a QoS profile, a QoS rule, or SLA subscription information.

In some embodiments, the receiving module 501, is configured to receive a signaling message sent from the first network element, where the signaling message carries the first data rights and interests information; and the signaling message includes at least one of: an NAS message, an RRC message, a system information (SI) message, or a QoS control message.

In some embodiments, the sending module 503, is further configured to send a response message for the first data rights and interests information to the first network element, where the response message for the first data interest information includes at least one of: a rights and interests feedback message, where the rights and interests feedback message includes a feedback response from the second network element on whether to accept a content indicated by the first data rights and interests information; a rights and interests negotiation request, where the rights and interests negotiation request includes a request from the second network element to modify the first data rights and interests information; second data rights and interests information, where the second data rights and interests information is rights and interests assistance information for the second network element to assist the first network element in determining the first data rights and interests information; an effect feedback message; where the effect feedback information includes a reporting feedback from the second network element on an execution effect of a task corresponding to the first data rights and interests information.

In some embodiments, the sending module 503, is configured to receive the first data rights and interests information sent from the first network element through a third network element.

In some embodiments, the third network element includes at least one of: an access and mobility management function (AMF) network element, a network exposure function (NEF) network element, an access network capability exposure network element, a relay network element, a terminal device, a base station, a radio access network, a business entity, a third-party application, a capability exposure node, or an edge node.

In some embodiments, the first network element includes at least one of: a core network, a radio access network, a business entity, a terminal device, a network management center, a network control center, a network data asset management network element, a rights and interests management network element, a rights and interests management center, a rights and interests management layer, a rights and interests management entity, a rights and interests management function, a rights and interests management component, or a rights and interests management agent.

In some embodiments, the second network element includes at least one of: a terminal device, a base station, a radio access network, a business entity, a core network, a third-party application, a capability exposure node, or an edge node.

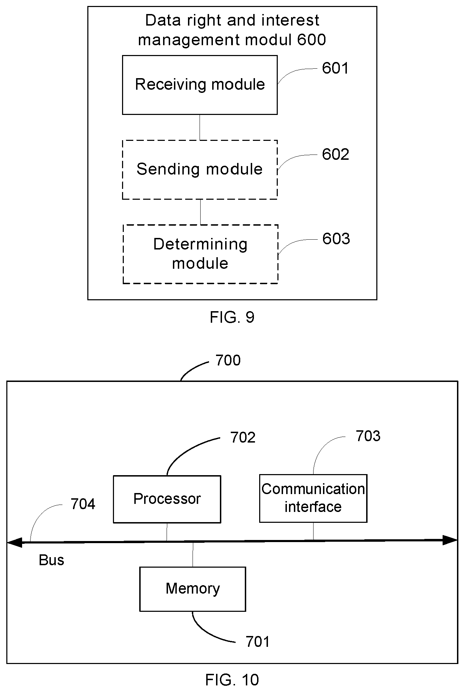

FIG. 9 is a structural schematic diagram of a data rights and interests management apparatus provided in the embodiments of the present disclosure, where the data rights and interests management apparatus is applied to a third network element and configured to perform the data rights and interests management method provided in the above method embodiments. As shown in FIG. 9, the data rights and interests management apparatus 600 includes: a receiving module 601. In some other embodiments, the data rights and interests management apparatus 600 may further include: a sending module 602 and a determining module 603.

The receiving module 601, is configured to receive first data rights and interests information sent from a first network element, where the first data rights and interests information includes related information of data rights and interests of the second network element, the data rights and interests of the second network element are used to characterize rights and interests of the second network element related to data generated by the second network element.

In some embodiments, the sending module 602, is configured to send the first data rights and interests information to the second network element.

In some embodiments, the determining module 603, is configured to determine data rights and interests of the third network element based on the first data rights and interests information.

In a case where the functions of the above integrated modules are implemented in the form of hardware, the embodiments of the present disclosure provide a structure of the communication apparatus involved in the above embodiments. As shown in FIG. 10, the communication apparatus 700 includes a memory 701, a processor 702, a communication interface 703 and a bus 704.

The memory 701 may be, but not limited to, a read-only memory (ROM) or other types of static storage devices capable of storing static information and instructions, a random access memory (RAM) or other types of dynamic storage devices capable of storing dynamic information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

The processor 702 may be modules and circuits that implement or perform various exemplary logical blocks described in conjunction with the embodiments of the present disclosure. The processor 702 may be a central processing unit, a general-purpose processor, a digital signal processor, an application specific integrated circuit, a field programmable gate array or other programmable logic devices, a transistor logic device, a hardware component or any combination thereof. The processor 702 may implement or perform various exemplary logical blocks, modules and circuits described in conjunction with the embodiments of the present disclosure. The processor 702 may also be a combination capable of implementing computing functions, for example, including a combination of one or more microprocessors, or a combination of a digital signal processor (DSP) and a microprocessor.

The communication interface 703 is configured to connect with other devices through a communication network. The communication network may be an Ethernet, a radio access network, a wireless local area network (WLAN), or the like.

In some embodiments, the memory 701 may be separated from the processor 702, and the memory 701 may be connected to the processor 702 via the bus 704 and is configured to store instructions or program codes. When calling and executing the instructions or the program codes stored in the memory 701, the processor 702 is capable of implementing the data rights and interests management method provided in the embodiments of the present disclosure.

In some embodiments, the memory 701 may also be integrated with the processor 702.

The bus 704 may be an extended industry standard architecture (EISA) bus or the like. Buses 704 may be divided into address buses, data buses, control buses, or the like. For the convenience of representation, only one thick line is used in FIG. 10 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the data rights and interests management method as described in any embodiment of the above-mentioned embodiments.

Exemplarily, the computer-readable storage medium may include, but is not limited to a magnetic storage device (e.g., a hard disk, a floppy disk or a magnetic tape, etc.), an optical disk (e.g., a compact disk (CD) or a digital versatile disk (DVD), etc.), a smart card and a flash memory device (e.g., an erasable programmable read-only memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

The embodiments of the present disclosure provide a computer program product containing instructions, and the computer program product, when running on a computer, causes the computer to perform the data rights and interests management method as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A data rights and interests management method, **characterized in that** the method is applied to a first network element, and comprises:
determining data rights and interests of a second network element, wherein the data rights and interests of the second network element are used to characterize rights and interests of the second network element related to data generated by the second network element; and
sending first data rights and interests information to the second network element, wherein the first data rights and interests information comprises related information of data rights and interests of the second network element.

2. The method according to claim 1, wherein the data rights and interests comprise at least one of: a data usage scope, a data privacy level, a data computing capability, a data ownership right, a data processing right, a data usage right, a data maintenance right, a data management right, a data privacy and security protection right, a data profit sharing strategy, a validity period of the data rights and interests, a life cycle of the data rights and interests, a data rights and interests type, a charging mode of the data rights and interests, a transaction mode of the data rights and interests, and an incentive obtained by the second network element for generating data.

3. The method according to any one of claims 1 to 2, wherein the first data rights and interests information comprises one of:
information for data rights and interests configuration;
information for data rights and interests change;
information for data rights and interests termination.

4. The method according to any one of claims 1 to 3, wherein determining the data rights and interests of the second network element comprises:
receiving a first data rights and interests request message sent from the second network element; wherein the first data rights and interests request message carries at least one of following information: capability information related to the data rights and interests of the second network element; or data rights and interests expected to be obtained by the second network element; and
determining the data rights and interests of the second network element according to the first data rights and interests request message.

5. The method according to any one of claims 1 to 3, wherein after sending the first data rights and interests information to the second network element, the method further comprises:
receiving a response message for the first data rights and interests information and sent from the second network element, wherein the response message for the first data interest information comprises at least one of:
a rights and interests feedback message, wherein the rights and interests feedback message comprises a feedback response from the second network element on whether to accept a content indicated by the first data rights and interests information;
a rights and interests negotiation request, wherein the rights and interests negotiation request comprises a request from the second network element to modify the first data rights and interests information;
second data rights and interests information, wherein the second data rights and interests information is rights and interests assistance information for the second network element to assist the first network element in determining the first data rights and interests information;
an effect feedback message; wherein the effect feedback information comprises reporting feedback from the second network element on an execution effect of a task corresponding to the first data rights and interests information.

6. The method according to any one of claims 1 to 3, wherein sending the first data rights and interests information to the second network element comprises:
sending a second data rights and interests request message to the second network element, wherein the second data rights and interests request message carries the first data rights and interests information; or
receiving a first data rights and interests request message sent from the second network element, and sending a response message for the first data rights and interests request message to the second network element, wherein the response message for the first data rights and interests request message carries the first data rights and interests information; or
receiving a data service registration message sent from the second network element, and sending a response message for the data service registration message to the second network element, wherein the response information of the data service registration message carries the first data rights and interests information; or
receiving a service query message sent from the second network element, and sending a response message for the service query message to the second network element, wherein the response message for the service query message carries the first data rights and interests information; or
sending a connection request message to the second network element, wherein the connection request message carries the first data rights and interests information; or
receiving a connection request message sent from the second network element, and sending a response message for the connection request message to the second network element, wherein the response message for the connection request message carries the first data rights and interests information; or
sending a broadcast message, wherein the broadcast message carries the first data rights and interests information; or
sending a system configuration message, wherein the system configuration message carries the first data rights and interests information; or
sending quality of service (QoS) information, wherein the QoS information carries the first data rights and interests information; or
sending a packet, wherein a header of the packet carries the first data rights and interests information; or
sending a packet, wherein a data area of the packet carries the first data rights and interests information; or
sending an authentication message to the second network element, wherein the authentication message carries the first data rights and interests information.

7. The method according to claim 6, wherein the QoS information comprises at least one of:
a QoS characteristic parameter, a QoS profile, a QoS rule, or service-level agreement (SLA) subscription information.

8. The method according to any one of claims 1 to 3, wherein sending the first data rights and interests information to the second network element comprises:
sending a signaling message to the second network element, wherein the signaling message carries the first data rights and interests information, and the signaling message comprises at least one of: a non-access stratum (NAS) message, a radio resource control (RRC) message, a system information (SI) message, or a QoS control message.

9. The method according to claim 1, wherein sending the first data rights and interests information to the second network element comprises:
sending the first data rights and interests information to the second network element through a third network element.

10. The method according to claim 1, further comprising:
sending the first data rights and interests information to a third network element, so as to enable the third network element to determine data rights and interests of the third network element according to the first data rights and interests information.

11. The method according to claim 9 or 10, wherein the third network element comprises at least one of: an access and mobility management function (AMF) network element, a network exposure function (NEF) network element, an access network capability exposure network element, a relay network element, a terminal device, a base station, a radio access network, a business entity, a third-party application, a capability exposure node, or an edge node.

12. The method according to any one of claims 1 to 3, wherein the first network element comprises at least one of: a core network, a radio access network, a business entity, a terminal device, a network management center, a network control center, a network data asset management network element, a rights and interests management network element, a rights and interests management center, a rights and interests management layer, a rights and interests management entity, a rights and interests management function, a rights and interests management component, or a rights and interests management agent.

13. The method according to claim 12, wherein
the core network comprises at least one of: a policy control function (PCF), an access and mobility management function (AMF), a session management function (SMF), a unified data management (UDM), a unified data repository (UDR), a user plane function (UPF), or a network exposure function (NEF);
the radio access network comprises at least one of: a centralized unit (CU), a distributed unit (DU), a service data adaptation protocol (SDAP), a packet data convergence protocol (PDCP), a radio link control (RLC), or a medium access control (MAC);
the rights and interests management network element comprises at least one of: a dedicated rights and interests network element, or a rights and interests enhanced network element formed by adding a rights and interests management function to an existing network element.

14. The method according to any one of claims 1 to 3, wherein the second network element comprises at least one of: a terminal device, a base station, a radio access network, a business entity, a core network, a third-party application, a capability exposure node, or an edge node.

15. The method according to claim 14, wherein
the core network comprises at least one of: a PCF, an AMF, an SMF, a UDM, a UDR, a UPF, or an NEF;
the radio access network comprises at least one of: a CU, a DU, an SDAP, a PDCP, an RLC, or an MAC;
the edge node comprises: mobile edge computing (MEC);
the capability exposure node comprises at least one of: an NEF or an RAN capability exposure network element.

16. A data rights and interests management method, **characterized in that** the method is applied to a second network element, and comprises:
receiving first data rights and interests information sent from a first network element, wherein the first data rights and interests information comprises related information of data rights and interests of the second network element, the data rights and interests are used to characterize rights and interests of the second network element related to data generated by the second network element; and
acquiring data rights and interests of the second network element according to the first data rights and interests information.

17. The method according to claim 16, wherein a content of the data rights and interests comprises at least one of: a data usage scope, a data privacy level, a data computing capability, a data ownership right, a data processing right, a data usage right, a data maintenance right, a data management right, a data privacy and security protection right, a data profit sharing strategy, a validity period of the data rights and interests, a life cycle of the data rights and interests, a data rights and interests type, a charging mode of the data rights and interests, a transaction mode of the data rights and interests, and an incentive obtained by the second network element for generating data.

18. The method according to any one of claims 16 to 17, wherein the first data rights and interests information comprises at least one of:
information for data rights and interests configuration;
information for data rights and interests change; or
information for data rights and interests termination.

19. The method according to any one of claims 16 to 18, further comprising:
sending a first data rights and interests request message to the first network element, wherein the first data rights and interests request message comprises at least one of: capability information related to the data rights and interests of the second network element; or data rights and interests expected to be obtained by the second network element.

20. The method according to claim 19, wherein sending the first data rights and interests request message to the first network element comprises:
sending a capability reporting message to the first network element, wherein the capability reporting message comprises the first data rights and interests request message; or
sending a connection establishment request message to the first network element, wherein the connection establishment request message comprises the first data rights and interests request message; or
sending a registration request message to the first network element, wherein the registration request message comprises the first data rights and interests request message; or
sending an authentication request message to the first network element, wherein the authentication request message comprises the first data rights and interests request message; or
sending a response message for the authentication request message and sent from the first network element to the first network element, wherein the response message for the authentication request message comprises the first data rights and interests request message.

21. The method according to any one of claims 16 to 18, wherein receiving the first data rights and interests information sent from the first network element comprises:
receiving a second data rights and interests request message sent from the first network element, wherein the second data rights and interests request message carries the first data rights and interests information; or
receiving a response message for a first data rights and interests request message and sent from the first network element, wherein the response message for the first data rights and interests request message carries the first data rights and interests information; or
receiving a response message for a service registration message and sent from the first network element, wherein the response message for the service registration message carries the first data rights and interests information; or
receiving a response message for a service query message and sent from the first network element, wherein the response message for the service query message carries the first data rights and interests information; or
receiving a connection request message sent from the first network element, wherein the connection request message carries the first data rights and interests information; or
receiving a response message for a connection request message and sent from the first network element, wherein the response message for the connection request message carries the first data rights and interests information; or
receiving a broadcast message sent from the first network element, wherein the broadcast message carries the first data rights and interests information; or
receiving a system configuration message sent from the first network element, wherein the system configuration message carries the first data rights and interests information; or
receiving QoS information sent from the first network element, wherein the QoS information carries the first data rights and interests information; or
receiving a packet sent from the first network element, wherein a header of the packet carries the first data rights and interests information; or
receiving a packet sent from the first network element, wherein a data area of the packet carries the first data rights and interests information; or
receiving an authentication message sent from the first network element, wherein the authentication message carries the first data rights and interests information.

22. The method according to claim 21, wherein the QoS information comprises at least one of:
a QoS characteristic parameter, a QoS profile, a QoS rule, or SLA subscription information.

23. The method according to any one of claims 16 to 18, wherein receiving the first data rights and interests information sent from the first network element comprises:
receiving a signaling message sent from the first network element, wherein the signaling message carries the first data rights and interests information; and the signaling message comprises at least one of: a NAS message, an RRC message, a system information (SI) message, or a QoS control message.

24. The method according to any one of claims 16 to 18, further comprising:
sending a response message for the first data rights and interests information to the first network element, wherein the response message for the first data rights and interests information comprises at least one of:
a rights and interests feedback message, wherein the rights and interests feedback message comprises a feedback response from the second network element on whether to accept a content indicated by the first data rights and interests information;
a rights and interests negotiation request, wherein the rights and interests negotiation request comprises a request from the second network element to modify the first data rights and interests information;
second data rights and interests information, wherein the second data rights and interests information is rights and interests assistance information for a second network element to assist the first network element in determining the first data rights and interests information;
an effect feedback message; wherein the effect feedback information comprises reporting feedback from the second network element on an execution effect of a task corresponding to the first data rights and interests information.

25. The method according to any one of claims 16 to 18, wherein receiving the first data rights and interests information sent from the first network element comprises:
receiving the first data rights and interests information sent from the first network element through a third network element.

26. The method according to claim 25, wherein the third network element comprises at least one of: an access and mobility management function (AMF) network element, a network exposure function (NEF) network element, an access network capability exposure network element, a relay network element, a terminal device, a base station, a radio access network, a business entity, a third-party application, a capability exposure node, or an edge node.

27. The method according to any one of claims 16 to 18, wherein the first network element comprises at least one of: a core network, a radio access network, a business entity, a terminal device, a network management center, a network control center, a network data asset management network element, a rights and interests management network element, a rights and interests management center, a rights and interests management layer, a rights and interests management entity, a rights and interests management function, a rights and interests management component, or a rights and interests management agent.

28. The method according to any one of claims 16 to 18, wherein the second network element comprises at least one of: a terminal device, a base station, a radio access network, a business entity, a core network, a third-party application, a capability exposure node, or an edge node.

29. A data rights and interests management method, **characterized in that** the method is applied to a third network element, and comprises:
receiving first data rights and interests information sent from a first network element, wherein the first data rights and interests information comprises related information of data rights and interests of a second network element, the data rights and interests of the second network element are used to characterize rights and interests of the second network element related to data generated by the second network element.

30. The method according to claim 29, further comprising:
sending the first data rights and interests information to the second network element.

31. The method according to claim 29, further comprising:
determining data rights and interests of the third network element based on the first data rights and interests information.

32. A communication apparatus, **characterized by** comprising: a processor and a memory for storing instructions executable by the processor;
wherein the processor is configured to execute the instructions, so as to enable the communication apparatus to perform the data rights and interests management method according to any one of claims 1 to 31.

33. A computer readable storage medium, wherein the computer readable storage medium has stored computer instructions thereon, and the computer instructions, when executed on an electronic device, cause the electronic device to perform the data rights and interests management method according to any one of claims 1 to 31.
